# EUROPÄISCHE PATENTSCHRIFT

(11) **EP 1 492 702 B1**
(45) Veröffentlichungstag und Bekanntmachung des Hinweises auf die Patenterteilung: **10.08.2005**
(21) Anmeldenummer: 03708237.7
(22) Anmeldetag: 14.03.2003
(51) Int. Cl.: B64D 11/06, B60N 2/48, A47C 7/38

(54) **KOPFSTÜTZE FÜR EINEN SITZ**
HEADREST FOR A SEAT
APPUI-TETE POUR SIEGE

(30) Priorität: 05.04.2002 DE 10215058
(43) Veröffentlichungstag der Anmeldung: 05.01.2005
(73) Patentinhaber: Recaro Aircraft Seating GmbH & Co.KG., 74523 Schwäbisch Hall (DE)
(72) Erfinder: BAUER, Jürgen, 71560 Sulzbach (DE)
(74) Vertreter: Bartels, Martin Erich Arthur
(86) Internationale Anmeldenummer: PCT/EP2003/002668
(87) Internationale Veröffentlichungsnummer: WO 2003/084812

(56) Entgegenhaltungen:
- WO-A-95/09742
- US-A- 3 547 486
- US-A- 3 655 241
- US-B1- 6 250 716

## Beschreibung

Die Erfindung betrifft eine Kopfstütze für einen Sitz, vorzugsweise Fahrgastsitz, insbesondere Fluggastsitz, mit den Merkmalen des Patentanspruches des Oberbegriffes des Patentanspruches 1.

Eine aus dem Stand der Technik bekannte Kopfstütze ist in der WO 95/09742 offenbart. Die dort beschriebene Kopfstütze weist eine Neigungs- und eine Höheneinstelleinrichtung zum Einstellen der Neigung bzw. der Höhe der Kopfstütze gegenüber der Rückenlehne eines Sitzes auf. Die Einstelleinrichtungen für die Neigung und für die Höhe sind auf der einem Benutzer abgewandten rückwärtigen Seite der Kopfstütze untergebracht und teilweise in die Rückenlehne des betreffenden Sitzes integriert. Die Längsführungen für die Höheneinstelleinrichtung sind Bestandteil der Rückenlehne und fest mit deren Rahmenkonstruktion verbunden. Die Schwenkachse, um die die Kopfstütze bei einer Einstellung ihrer Neigung bewegt wird, ist in der durch die Längsführungen gebildeten Ebene untergebracht und wird bei einer Einstellung der Höhe der Kopfstütze in entsprechendem Maße in der Höhe verändert. Die Bauelemente für die Neigungs- und die Höheneinstelleinrichtung sind im zentralen Bereich der Kopfstützenfläche angeordnet, so daß insbesondere die Neigungseinstellmöglichkeiten mit der bekannten Lösung reduziert sind.

Durch die US-A-3 655 241 sowie die US-A-3 547 486 sind gattungsgemäße Kopfstützen für einen Fahrgastsitz bekannt, mit mindestens einer Neigungs- und einer Höheneinstellungseinrichtung zum Einstellen der Neigung bzw. der Höhe der Kopfstütze gegenüber der Rückenlehne des Sitzes, an der die Kopfstütze anordenbar ist, wobei eine Schwenkachse für die jeweilige Neigungseinstellung der Kopfstütze dieser abgewandt an einem zugeordneten Führungsteil angeordnet ist, daß verschiebbar mit einer Längsführung zusammenwirkt und zusammen mit dieser Teil der Höheneinstellungseinrichtung ist, wobei die Längsführung integraler Bestandteil der Kopfstütze ist und wobei die Schwenkachse des jeweiligen Führungsteiles gegenüber der Rückenlehne stationär angeordnet ist.

Bei den bekannten gattungsgemäßen Lösungen ist die Schwenkachse als Neigungseinstelleinrichtung entlang der Oberseite der Rückenlehne geführt, und:in einer gemeinsamen Ebene mit der Längsführung der Höheneinstelleinrichtung angeordnet. Bei der dahingehend bekannten Ausgestaltung kann zur Höheneinstellung die Kopfstütze gegenüber der Rückenlehne auf- und abbewegt werden und darüber hinaus besteht die Möglichkeit, die Kopfstütze für eine Neigungseinstellung gegenüber der Rückenlehne vor- und zurückzuverschwenken und zwar bedingt durch den Verlauf der Schwenkachse quer und entlang zur Oberseite der Rückenlehne. Aufgrund der dahingehenden Anordnung sind die Einstellmöglichkeiten für die Kopfstütze entsprechend eingeschränkt. Auch bauen die bekannten gattungsgemäßen Lösungen konstruktiv kompliziert auf.

Ausgehend von diesem Stand der Technik stellt sich die Erfindung die Aufgabe, die bekannten Kopfstützenlösungen dahingehend weiter zu verbessern, daß der konstruktive Aufwand insgesamt verringert wird und gleichzeitig die Möglichkeiten für die Höhen- und Neigungseinstellungen erweitert werden.

Die dahingehende Aufgabe ist gelöst durch eine Kopfstütze mit den Merkmalen des Patentanspruches 1 in seiner Gesamtheit. Dadurch, daß gemäß dem kennzeichnenden Teil des Patentanspruches 1 die Höheneinstelleinrichtung zwischen der Schwenkachse für die Neigungseinstellung der Kopfstütze und der einem Benutzer abgewandten Seite der Kopfstütze angeordnet ist; kann die Rückenlehnenstruktur stark vereinfacht ausgeführt werden, da an ihrem Rahmen keine Verstärkungsstrukturen oder Führungsschienen zur Aufnahme einer Kopfstütze notwendig sind, und die Möglichkeiten der Höhen- und Neigungseinstellung der Kopfstütze gegenüber der Rückenlehne sind stark erweitert. So läßt sich die Kopfstütze mit ihrer Unterseite für eine Neigungseinstellung bis zur Schwenkeinrichtung ausziehen, mit der Folge, daß keine Teile der Kopfstütze mehr mit der Rückenlehne kollidieren können, was bei den bekannten Lösungen zu entsprechenden Einschränkungen der Einstellmöglichkeiten führt. Der Einstellbereich der Neigung der Kopfstütze ist mit der erfindungsgemäßen Lösung derart optimiert, daß die Neigung bis hin zu extremen Neigungswinkeln einstellbar ist.

Bei einer weiteren bevorzugten Ausführungsform der erfindungsgemäßen Kopfstütze weist die Höheneinstelleinrichtung eine Rastpositioniereinrichtung auf. Auf diese Weise kann die Kopfstütze einfach und wiederholbar auf bestimmte vorgegebene oder vorgebbare Höhenpositionen eingestellt werden. Bei einer besonders bevorzugten Ausführungsform weist die Rastpositioniereinrichtung in der Längsführung ein Abstandsteil mit Ausnehmungen auf, in die ein vorgespanntes Rastteil des Führungsteils in Eingriff bringbar ist. Durch die zumindest teilweise Integration der Rastpositioniereinrichtung in die Längsführung entsteht eine besonders kompakte und dadurch raumsparende Anordnung der Höheneinstelleinrichtung.

Bei einer besonders bevorzugten Ausführungsform der erfindungsgemäßen Kopfstütze weist die Höheneinstelleinrichtung mindestens ein Energiespeicherelement, insbesondere in Form einer Zugfeder auf, das sich entlang der jeweiligen Längsführung erstreckt und mit einer Angriffsstelle am Führungsteil angelenkt ist sowie mit einer weiteren Angriffsstelle im Bereich der Unterseite der Kopfstütze. Das Energiespeicherelement unterstützt bei einer Höheneinstellung der Kopfstütze gegen die Schwerkraftrichtung (nach oben) die Einstellbewegung. Bei einer besonders kostengünstig zu realisierenden Ausführung ist das Energiespeicherelement durch mindestens eine Zugfeder realisiert. Durch die Erstreckung entlang der Längsführung ergibt sich eine optimale Kraftübertragung von dem Energiespeicherelement auf die Kopfstütze unter Vermeidung eines Kragarmes am Führungsteil, was ggf. ein Verkanten des Führungsteils in der Längsführung zur Folge haben könnte und damit eine schlechte Bedienbarkeit der Höheneinstelleinrichtung.

Bei einer weiteren bevorzugten Ausführungsform weist das Führungsteil eine Aufnahme für das Energiespeicherelement derart auf, daß in der vollständig ausgezogenen Stellung der Kopfstütze das Energiespeicherelement in das Führungsteil integriert ist. Auf diese Weise ist eine optimale Ausnutzung des zur Verfügung stehenden Einstellweges für die Höheneinstellung gegeben.

Bei einer besonders bevorzugten Ausführungsform der erfindungsgemäßen Kopfstütze dient für die Angriffsstelle des Energiespeicherelements im Bereich der Unterseite der Kopfstütze eine Aufnahmeteil, das lösbar mit der Kopfstütze verbunden ist. Im Falle einer Wartung oder Reinigung ist derart das Energiespeicherelement bzw. die gesamte Höheneinstelleinrichtung mit geringem Aufwand zugänglich.

Bei einer weiteren bevorzugten Ausführungsform ist die Kopfstütze mit zwei Seitenteilen versehen, die gegenüber einem Grundteil und über eine Festlegeeinrichtung, insbesondere Rasteinrichtung, in vorgebbare Winkellagen zu dem Grundteil anordenbar sind. Die für einen Benutzer durch die Seitenteile gegebenen weiteren Anpassungsmöglichkeiten der Kopfstütze bedeuten einen erheblichen Komfortgewinn. Die Einstellung der Seitenteile in vorgebbare Winkellagen vereinfacht die Handhabung.beim Einstellvorgang und eine Rasteinrichtung erlaubt die Beibehaltung einer einmal gewählten Einstellung, so daß keine unerwünschte Verstellung der Seitenteile erfolgt.

Bei einer vorteilhaften weiteren Ausführungsform der Kopfstütze ist die Schwenkachse durch eine Reibkupplung am Führungsteil gebildet und über die Reibkupplung ist eine Befestigungsstelle für die Kopfstütze an einer Rückenlehne mit dem Führungsteil verbunden. Durch die Reibkupplung ist eine stufenlose Neigungseinstellung der Kopfstütze möglich. Indem die Reibkupplung das Führungsteil mit einer Befestigungsstelle für die Kopfstütze an der Rückenlehne verbindet, ist eine sehr kompakte Bauweise gegeben, bei der nur geringe Hebelkräfte auf die einzelnen Bauteile ausgeübt werden. Die mechanische Belastbarkeit der Höhen- und Neigungseinstelleinrichtung ist dadurch sehr groß und im Falle einer hohen Belastung, z.B. durch einen Kopfaufprall, können eingeleitete Kräfte sicher und kopfschonend aufgenommen werden.

Bei einer besonders bevorzugten Ausführungsform sind das Grundteil und die beiden Seitenteile als flächenförmige Formteile ausgebildet, was eine kostengünstige Herstellung dieser Teile erlaubt. Durch geeignet gewählte Ausnehmungen in den Flächen ist eine Gewichtsreduzierung ohne wesentlichen Stabilitätsverlust realisierbar.

Bei einer weiteren bevorzugten Ausführungsform der Kopfstütze weist das Grundteil eine Mittenausnehmung auf und die Höhen- und Neigungseinstelleinrichtungen erstrecken sich beiderseits neben der Mittenausnehmung längs des Grundteiles den beiden Seitenteilen zugewandt. Durch die Mittenausnehmung ist neben der Gewichtsreduzierung insbesondere ein verbesserter Aufprallschutz für den Hinterkopf eines Sitzbenutzers im Falle eines Unfalls gegeben, da sich im Bereich der Ausnehmung unter der Polsterung der Kopfstütze keinerlei harte oder kantige Strukturen befinden, die zu einer Kopfverletzung führen könnten. Die Höhen- und Neigungseinstelleinrichtung ist daher beiderseits neben der Mittenausnehmung längs des Grundteiles den beiden Seitenteilen zugewandt angeordnet.

Eine besonders bevorzugte Ausführungsform der Kopfstütze ist dadurch gekennzeichnet, daß in die Polsterung mindestens eines der beiden Seitenteile eine Beleuchtungseinrichtung aufgenommen ist. Durch die damit verbundenen Möglichkeiten der individuellen Anpassung an die Bedürfnisse eines Sitzbenutzers ergibt sich eine erhebliche Komfortsteigerung.

Im Folgenden wird die erfindungsgemäße Kopfstütze anhand einer Ausführungsform nach der Zeichnung näher erläutert. Es zeigen in prinzipieller und nicht maßstabsgetreuer Darstellung die
- Fig. 1a bis g: die erfindungsgemäße Kopfstütze in unterschiedlichen Neigungs- und Höheneinstellungen bezüglich einer Rückenlehne eines Sitzes,
- Fig. 2: die Kopfstütze ohne Polsterung und Bezugsstoff in einer Gesamtansicht von schräg hinten,
- Fig. 3: die Kopfstütze ohne Polsterung und Bezugsstoff in einer Gesamtansicht von schräg vorne.

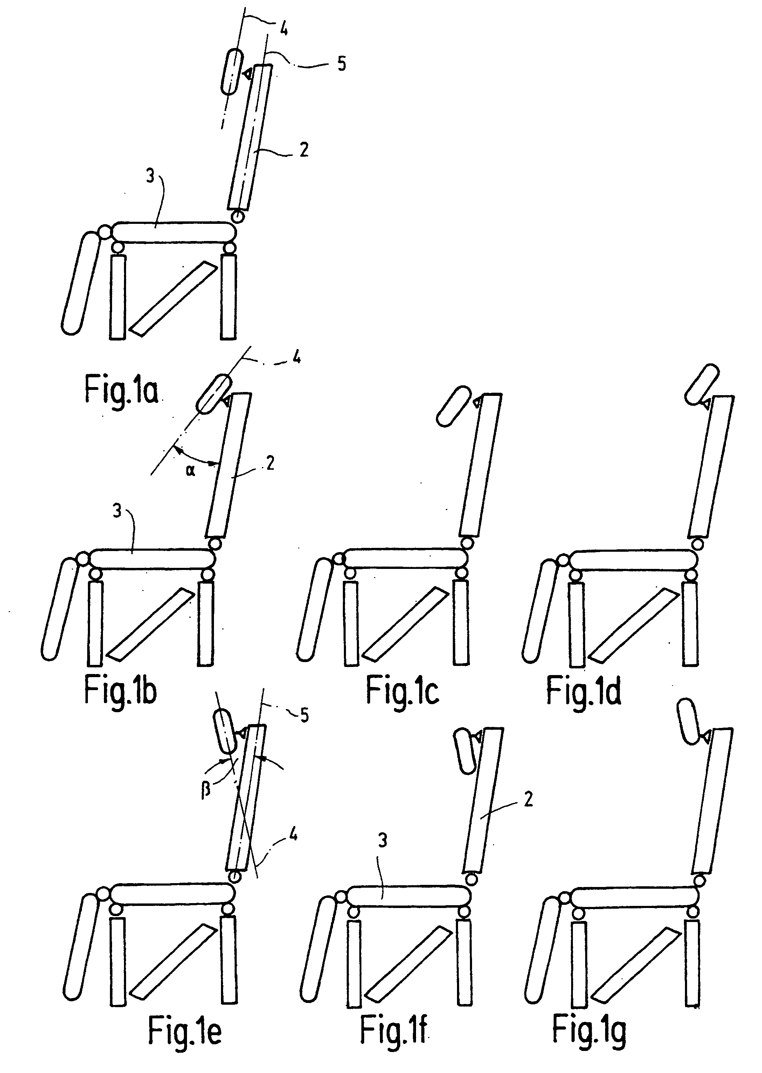

Die Fig. 1a bis g zeigen die erfindungsgemäße Kopfstütze 1 in unterschiedlichen Neigungs- und Höheneinstellungen bezüglich einer Rückenlehne 2 eines Sitzes 3. In Fig. 1a ist die Kopfstütze 1 in einer Art Grundstellung gezeigt, bei der sie eine mittlere Höhe einnimmt und bei der die Längsachse 4 der Kopfstütze parallel zur Längsachse 5 der Rückenlehne ausgerichtet ist. In den Fig. 1b bis d weist die Kopfstütze 1 gegenüber der Rückenlehne 2 einen positiven Neigungswinkel α auf, in den Fig. 1e bis g einen negativen Neigungswinkel β. Die genannten Figuren machen die Vielzahl an unterschiedlichsten Einstellmöglichkeiten deutlich.

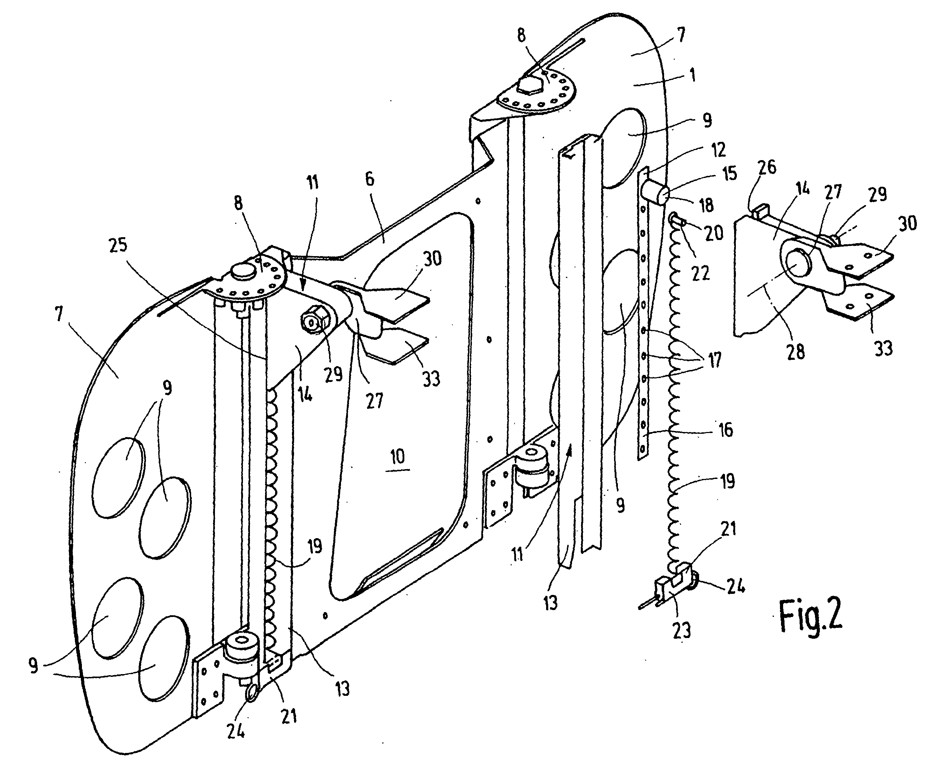

Die Fig. 2 zeigt die Kopfstütze 1 ohne Polsterung und Bezugsstoff in einer Gesamtansicht mit teilweiser Explosionsdarstellung von schräg hinten. Die Kopfstütze 1 weist ein Grundteil 6 auf, an denen zwei Seitenteile 7 schwenkbeweglich angeordnet sind. Die Schwenkbewegung der Seitenteile 7 gegenüber dem Grundteil 6 ist durch jeweils eine Festlegeeinrichtung 8 in der jeweils von einem Benutzer gewünschten Position arretierbar. Die Festlegeeinrichtung 8 kann hierzu als eine Rasteinrichtung ausgeführt sein, bei der eine unter mechanischer Vorspannung stehende Raste - an einem Beschlagteil des Grundteils 6 angeordnet - in zuordenbare Ausnehmungen oder Vertiefungen einer Rastkulisse einrastet und derart eine Anordnung der Seitenteile 7 in vorgebbaren Winkellagen zu dem Grundteil 6 ermöglicht. Die Festlegeeinrichtung 8 kann auch so ausgeführt werden, daß eine Einstellung der Seitenteile 7 in beliebiger Winkellage zu dem Grundteil 6 erfolgen kann. Bei einer solchen Lösung können die Seitenteile 7 in der jeweils gewünschten Position allein durch die in der Festlegeeinrichtung 8 auftretende Haftreibung gehalten werden oder zusätzlich durch die Arretierwirkung einer Verriegelungseinrichtung (nicht dargestellt).

Das Grundteil 6 und die Seitenteile 7 sind in der Ausführung nach Fig. 2 als flächenförmige Formteile ausgebildet. Diese können aus einem Kunststoff bestehen oder einem Metall, insbesondere einem Leichtmetall wie Aluminium. Die Formteile weisen Durchbrechungen 9 auf, die unter anderem der Gewichtsverringerung dienen. Das Grundteil 6 weist eine Durchbrechung in Form einer Mittenausnehmung 10 auf, zu deren beiden Seiten in Richtung der Seitenteile 7 jeweils eine Höhen- und Neigungseinstelleinrichtung - als Ganzes mit 11 bezeichnet - angeordnet ist. Derart ist der Bereich der Mittenausnehmung 10 des Grundteils 6 völlig frei gehalten von harten oder kantigen Strukturen, die im Falle eines starken Kopfaufpralls auf die Kopfstütze zu Verletzungen führen könnten. Anstelle einer flächenhaften Ausgestaltung des Grundteils 6 und der Seitenteile 7 ist auch eine Rohrrahmenkonstruktion möglich oder eine Kombination dieser Varianten.

Die Höheneinstelleinrichtung 12 weist jeweils eine Längsführung 13 auf, sowie ein Führungsteil 14 und eine Rastpositioniereinrichtung 15. Die Längsführung 13 erstreckt sich parallel zur Längsachse 4 der Kopfstütze beiderseits der Mittenausnehmung 10 des Grundteils 6. Die Längsführung 13 weist im Querschnitt ein klammerartiges Profil, z.B. ein Doppel-C-Profil auf, so daß das Führungsteil 14 sicher gehalten ist. In die Längsführung 13 integriert ist die Rastpostioniereinrichtung 15, die gemäß der Ausführung in Fig. 2 ein Abstandsteil 16 aufweist mit Ausnehmungen 17, in die ein vorgespanntes Rastteil 18 des Führungsteils 14 in Eingriff bringbar ist. Das Abstandsteil 16 kann ein Metall- oder Kunststoffstreifen sein, bei dem die Ausnehmungen 17 in Form von Durchgangsbohrungen oder Vertiefungen angelegt sind. Das vorgespannte Rastteil 18 läßt sich kostengünstig und zuverlässig als eine Raste mit federbelasteter Kugel ausführen. Das Ausüben einer mechanischen Vorspannung auf die Raste läßt sich aber auch durch hydraulische, pneumatische oder magnetische Mittel erreichen. Als weiterer Bestandteil kann die Höheneinstelleinrichtung 12 ein Energiespeicherelement 19 aufweisen, das den Höheneinstellvorgang bei einer Bewegung der Kopfstütze nach oben unterstützt.

Das Energiespeicherelement 19 erstreckt sich entlang der jeweiligen Längsführung 13 und ist mit einer Angriffsstelle 20 am Führungsteil 14 angelenkt sowie mit einer weiteren Angriffsstelle 21 im Bereich der Unterseite der Kopfstütze.

In der in Fig. 2 dargestellten Ausführungsform ist die Angriffsstelle 20 am Führungsteil 14 durch ein Verbindungselement 22 gebildet, das in einer anderen Ausführungsform aber auch entfallen kann, so daß das Energiespeicherelement 19 direkt an dem Führungsteil 14 angreift. Die Angriffstelle 21 im Bereich der Unterseite der Kopfstütze 1 wird durch ein Aufnahmeteil 23 gebildet, das lösbar mit der Kopfstütze 1 verbunden ist. Für die Verbindung des Aufnahmeteils 23 mit der Kopfstütze 1, insbesondere mit der Längsführung 13, kann das Aufnahmeteil 23 ein Sicherungsmittel 24 aufweisen, das in dem in Fig. 2 gezeigten Ausführungsbeispiel eine Art Splint ist, ansonsten aber auch von einer Schraube oder einem Spannstift gebildet werden kann.

Das Energiespeicherelement 19 ist in der Ausführungsform nach Fig. 2 durch eine Schraubenfeder gebildet, was eine sehr kostengünstige und sehr leichte Lösung darstellt. In anderen Ausführungsformen kann das Energiespeicherelement 19 auch durch ein hydraulisches oder pneumatisches Druckspeicherelement realisiert sein. Die Längsführung 13 und das Führungsteil 14 sind so gestaltet, daß das erstere das letztere zumindest teilweise umgreift oder umgekehrt und daß eine Bewegung der beiden Teile relativ zueinander im wesentlichen nur entlang der durch die Längsachse der Führung 13 vorgegebenen Richtung erfolgen kann.

Bei einer Positionierung der Kopfstütze 1 in minimaler Höhe gegenüber der Rückenlehne 2 ist, wie in Fig. 2 auf der linken Seite dargestellt, das Führungsteil 14 am oberen Ende 25 der Längsführung 13 positioniert und das Energiespeicherelement 19 ist aus seiner neutralen Lage heraus vorgespannt, so daß für eine nach oben gerichtete Bewegung bei einer Höheneinstellung der Kopfstütze 1 das Energiespeicherelement 19 unterstützend wirksam werden kann.

In der Position der maximalen Höheneinstellung der Kopfstütze 1 gegenüber der Rückenlehne 2 ist das Aufnahmeteil 23 der ihm zugewandten Unterseite des Führungsteils 14 genähert oder liegt zumindest teilweise an diesem an. Im letzteren Fall kann das Führungsteil 14 gleichzeitig die Funktion einer Arretierung am oberen Ende des Verstellweg der Höheneinstelleinrichtung 12 übernehmen. Eine Arretierung kann jedoch auch durch eine hydraulische oder pneumatische Ausführung des Energiespeicherelements 19 realisiert werden.

Die einander zugewandten Flächen der Längsführung 13 und des Führungsteils 14 weisen an mindestens einem dieser Bauteile eine nutartige Vertiefung 26 auf, die sich parallel zu der Längsrichtung der Längsführung 13 erstreckt. Das parallel hierzu angeordnete Energiespeicherelement 19 ist zumindest teilweise in der nutartigen Vertiefung 26 aufgenommen und ist insbesondere in der Position der maximalen Höheneinstellung der Kopfstütze 1 gegenüber der Rückenlehne 2 vollständig oder zumindest im wesentlichen zwischen der Längsführung 13 und dem Führungsteil 14 aufgenommen. In einer vorteilhaften Ausführungsform weist das Führungsteil 14 die nutartige Vertiefung 26 auf und ist insgesamt derart gestaltet, daß das Energiespeicherelement in der vollständig ausgezogenen Stellung der Kopfstütze 1 im Führungsteil 14 ganz aufgenommen ist.

Die Längsführungen 13 sind auf der einem Benutzer abgewandten Seite der Kopfstütze beiderseits der Mittenausnehmung 10 des Grundteils 6 angeordnet und derart integraler Bestandteil der Kopfstütze 1. Dadurch läßt sich die Neigungseinstelleinrichtung 27 gegenüber der Rückenlehne 2 stationär anordnen bzw. gegenüber der Kopfstütze 1 höhenvariabel anordnen, wodurch sich stark erweiterte Möglichkeiten für die Neigungseinstellung der Kopfstütze 1 gegenüber der Rückenlehne 2 ergeben. Eine optimale Gestaltung dieser Verhältnisse ist gegeben, wenn die Höheneinstelleinrichtung 12 zwischen der dem Benutzer abgewandten Seite der Kopfstütze 1 und einer Schwenkachse 28 für die Neigungseinstellung der Kopfstütze 1 angeordnet ist.

In der Ausführungsform nach Fig. 2 ist die Schwenkachse 28 durch eine Reibkupplung 29 am Führungsteil 14 gebildet, wodurch eine stufenlose Neigungseinstellung der Kopfstütze 1 ermöglicht ist. Über die Reibkupplung 29 ist das Führungsteil 14 mit einer Befestigungsstelle 30 an der Rükkenlehne 2 verbunden. An Stelle der Reibkupplung 29 kann auch eine motorische Einrichtung die Funktion der Verbindung von Kopfstütze und Rükkenlehne sowie der Arretierung der Kopfstütze 1 in der jeweils gewünschten Position übernehmen. Besonders vorteilhaft ist der Einsatz eines sogenannten Hydrolocks, der eine stufenlose Höheneinstellung erlaubt, wobei ein Krafteinsatz des Benutzers nur für eine Einstellbewegung der Kopfstütze 1 nach unten erforderlich ist, während bei einer Einstellbewegung der Kopfstütze nach oben der Hydrolock die hierzu notwendige Arbeit verrichtet.

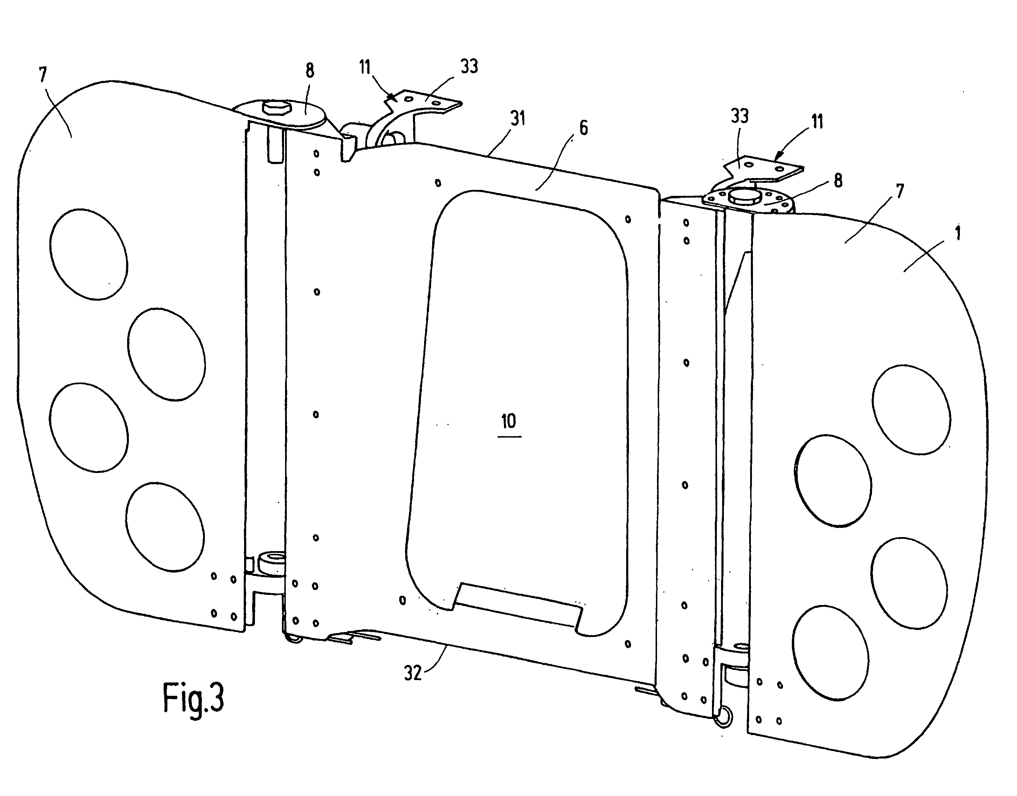

Die Fig. 3 zeigt die Kopfstütze 1 ohne Polsterung und Bezugsstoff in einer Gesamtansicht von schräg vorne. Die gesamte, dem Benutzer zugewandte Seite der Kopfstütze ist sehr glattflächig und eben gestaltet, da sämtliche Komponenten der Höhen- und Neigungseinstelleinrichtung 11 auf der dem Benutzer abgewandten Seite der Kopfstütze 1 angeordnet sind. Die Mittenausnehmung 10 im Grundteil 6 ist völlig freigehalten von Bauteilen jeglicher Art, wodurch im Falle eines starken Kopfaufpralles Verletzungen in diesem Bereich vermieden werden. Die Oberkante 31 des Grundteils 6 hat einen gegenüber einem Benutzer etwas nach hinten versetzen Verlauf, so daß sie zu einem Benutzer etwas entfernter liegt als die Unterkante 32 des Grundteils 6. Das Grundteil 6 besitzt auf diese Weise bereits eine ergonomisch vorgeformte Kontur, so daß für die ergonomische Gestaltung der Kopfstütze 1 insgesamt weniger Polstermaterial aufzuwenden ist.

Wie die obigen Ausführungen deutlich machen, sitzt der Neigungsdrehpunkt vor der Führungsschiene, so dass sich daraus unterschiedliche Neigungswinkel ergeben. Da innerhalb der Kopfstütze die Längsführung für sie integriert ist, läßt sich die Kopfstütze über eine Halterklammer 33 die der jeweiligen Kopfstütze zugeordnet ist, an der Rückenlehne 2 festlegen. Da mithin die Rückenlehne 2 selbst keine Längsführung aufweist, sind auch keine Schlitze in der Rückenlehnenpolsterung sichtbar, was den Sitzkomfort entsprechend erhöht, da auch bei komplett hochgefahrener Kopfstütze eine sonst übliche Schlitzführung in der Rückenlehne nicht fühlbar ist.

Die Kopfstütze läßt sich auch über die Halteklammern 33, die über die Reibkupplung 29 an der Neigungseinstelleinrichtung 27 festlegbar sind, schnell austauschen. Eine weitere Austauschmöglichkeit besteht auch darin, nach Lösen des Sicherungsmittels 24 in Form eines Sicherungsstiftes, die Kopfstütze mit ihren Längsführungen 13 von der Rückenlehne 2 abzunehmen und die Höhen- und Neigungseinstelleinrichtung 11 verbleibt dann stationär an der Rückenlehne 2. Bei einer nicht näher dargestellten Ausführungsform kann die Höheneinstelleinrichtung 12 durch die jeweilige Längsführung 13 selbst gebildet sein. In dem dahingehenden Fall sind die Ausnehmungen 17 unmittelbar in die Längsführung integriert. Durch den Einsatz des Abstandsteils 16 als eigenständiges Bauteil kann dieses jedoch für den Eingriff der Rastkugel robust ausgebildet sein, beispielsweise aus einem Stahlwerkstoff bestehen, der einem geringen Verschleiß unterliegt, wohingegen die Längsführung 13 ohne weiteres dann aus einem leichten Kunststoffmaterial besteht.

## Patentansprüche

1. Kopfstütze (1) für einen Sitz (3), vorzugsweise Fahrgastsitz, insbesondere Fluggastsitz, mit mindestens einer Neigungs (27) - und einer Höheneinstelleinrichtung(12) zum Einstellen der Neigung bzw. der Höhe der Kopfstütze (1) gegenüber der Rückenlehne (2) des Sitzes (3), an der die Kopfstütze (1) anordenbar ist, wobei eine Schwenkachse (28) für die jeweilige Neigungseinstellung der Kopfstütze (1) dieser abgewandt an einem zugeordneten Führungsteil (14) angeordnet ist, das verschiebbar mit einer Längsführung (13) zusammenwirkt und zusammen mit dieser Teil der Höheneinstelleinrichtung (12) ist, wobei die Längsführung (13) integraler Bestandteil der Kopfstütze (1) ist und wobei die Schwenkachse (28) des jeweiligen Führungsteils (14) gegenüber der Rückenlehne (2) stationär angeordnet ist, **dadurch gekennzeichnet, daß** die Höheneinstelleinrichtung (12) zwischen der Schwenkachse (28) für die Neigungseinstellung der Kopfstütze (1) und der einem Benutzer abgewandten Seite der Kopfstütze (1) angeordnet ist.

2. Kopfstütze nach Anspruch 1, **dadurch gekennzeichnet, dass** die Höheneinstelleinrichtung (12) eine Rastpositioniereinrichtung (15) aufweist.

3. Kopfstütze nach Anspruch 2, **dadurch gekennzeichnet, daß** die Rastpositioniereinrichtung (15) in der Längsführung (13) ein Abstandsteil (16) mit Ausnehmungen (17) aufweist, in die ein vorgespanntes Rastteil (18) des Führungsteils (14) in Eingriff bringbar ist.

4. Kopfstütze nach einem der Ansprüche 1 bis 3, **dadurch gekennzeichnet, daß** die Höheneinstelleinrichtung (12) mindestens ein Energiespeicherelement (19) insbesondere in Form einer Zugfeder aufweist, das sich entlang der jeweiligen Längsführung (13) erstreckt und mit einer Angriffsstelle (20) am Führungsteil (14) angelenkt ist sowie mit einer weiteren Angriffsstelle (21) im Bereich der Unterseite der Kopfstütze (1).

5. Kopfstütze nach Anspruch 4, **dadurch gekennzeichnet, daß** für die weitere Angriffsstelle (21) im Bereich der Unterseite der Kopfstütze (1) ein Aufnahmeteil (23) dient, das lösbar mit der Kopfstütze (1) verbunden ist.

6. Kopfstütze nach Anspruch 4 oder 5, **dadurch gekennzeichnet, daß** das Führungsteil (14) eine Aufnahme für das Energiespeicherelement (19) derart aufweist, daß in der vollständig ausgezogenen Stellung der Kopfstütze (1) das Energiespeicherelement (19) in das Führungsteil (14) integriert ist.

7. Kopfstütze nach einem der Ansprüche 1 bis 6, **dadurch gekennzeichnet, daß** diese mit zwei Seitenteilen (7) versehen ist, die gegenüber einem Grundteil (6) und über eine Festlegeeinrichtung (8), insbesondere Rasteinrichtung, in vorgebbare Winkellagen zu dem Grundteil (6) anordenbar sind.

8. Kopfstütze nach einem der Ansprüche 1 bis 7, **dadurch gekennzeichnet, daß** die Schwenkachse (28) durch eine Reibkupplung (29) am Führungsteil (14) gebildet ist und daß über die Reibkupplung (29) eine Befestigungsstelle (30) für die Kopfstütze (1) an einer Rückenlehne (2) mit dem Führungsteil (14) verbunden ist.

9. Kopfstütze nach Anspruch 7 oder 8, **dadurch gekennzeichnet; daß** das Grundteil (6) und die beiden Seitenteile (7) als flächenförmige Formteile ausgebildet sind.

10. Kopfstütze nach Anspruch 9, **dadurch gegenzeichnet, daß** das Grundteil (6) eine Mittenausnehmung (10) aufweist und dass die Höhen- und Neigungseinstelleinrichtungen (11) sich beiderseits neben der Mittenausnehmung (10) längs des Grundteiles (6) den beiden Seitenteilen (7) zugewandt erstrecken.

11. Kopfstütze nach einem der Ansprüche 7 bis 10, **dadurch gekennzeichnet, daß** in die Polsterung mindestens eines der beiden Seitenteile (7) eine Beleuchtungseinrichtung aufgenommen ist.

## Claims

1. Head rest (1) for a seat (3), preferably a vehicle passenger seat, especially for flight passengers, with at least one incline (27) and one height adjustment means (12) for adjusting the incline, i.e. the height of the head rest (1) of the seat (3) in relation to the back rest (2) of the seat (3) on which the head rest (1) is to be arranged, whereby a tilt axis (28) for the relevant incline adjustment of the head rest (1) is arranged on an associated guide part (14) facing away from the same and displaceably co-ordinates with a longitudinal guide (13) and constitutes a height adjustment means (12) together with this part, whereby the longitudinal guide (13) is an integral part of the head rest (1), and whereby the tilt axis (28) of the relevant guide part (14) is positioned stationary in relation to the back rest (2), **characterised in that** the height adjustment means (12) is positioned between the tilt axis (28) for the incline adjustment of the head rest (1) and the side of the head rest (1) facing away from a user.

2. Head rest according to Claim 1, **characterised in that** the height adjustment means (12) incorporates an arresting positioning means (15).

3. Head rest according to Claim 2, **characterised in that** the arresting positioning means (15) incorporates a distancer (16) with recesses (17) in the longitudinal guide (13), into which a pre-tensioned arresting part (18) of the guide part (14) can be engaged.

4. Head rest according to one of the Claims 1 to 3, **characterised in that** the height adjustment means (12) incorporates at least one energy storage element (19), especially in the form of a traction spring, which extends along the relevant longitudinal guide (13) and is controlled by means of a contact point (20) on the guide part (14) as well as a further contact point (21) within the area of the underside of the head rest (1).

5. Head rest according to Claim 4, **characterised in that** the same incorporates a receiving part (23) for the further contact point (21) within the area of the underside of the head rest (1), which is disconnectably connected to the head rest (1).

6. Head rest according to Claim 4 or 5, **characterised in that** the guide part (14) incorporates a receiving part for the energy storage element (19) of a type that integrates the energy storage element (19) into the guide part (14) in the completely extended position of the head rest (1).

7. Head rest according to one of the Claims 1 to 6, **characterised in that** the same is equipped with two side parts (7) which can be positioned opposite a base part (6) and via a fixing means (8), especially an arresting means, in pre-determined angled positions in relation to the base part (6).

8. Head rest according to one of the Claims 1 to 7, **characterised in that** the tilt axis (28) is formed by a friction coupling (29) on the guide part (14), and **in that** a fitting point (30) for the head rest (1) is connected with a guide part (14) of the back rest (2) via the friction coupling (29).

9. Head rest according to Claim 7 or 8, **characterised in that** the base part (6) and the two side parts (7) take the form of two-dimensional form parts.

10. Head rest according to Claim 9, **characterised in that** the base part (6) incorporates a central recess (10), and **in that** the height and incline adjustment means (11) extend on both sides along the central recess (10) of the base part (6) facing the two side parts (7).

11. Head rest according to one of the Claims 7 to 10, **characterised in that** a light unit is incorporated into the upholstery of at least one of the two side parts (7).

## Revendications

1. Appuie-tête (1) pour un siège (3), de préférence un siège de passager, en particulier un siège de passager aérien, avec au moins un dispositif de réglage de l'inclinaison (27) et un dispositif de réglage de la hauteur (12) afin de régler l'inclinaison ou éventuellement la hauteur de l'appuie-tête (1) par rapport au dossier (2) du siège (3), sur lequel l'appuie-tête (1) peut être disposé, un axe de pivotement (28) pour le réglage respectif de l'inclinaison de l'appuie-tête (1) opposé à celui-ci étant placé sur un élément coulissant adjoint (14) qui concoure de manière mobile avec un guidage longitudinal (13) et qui est associé avec cette partie du dispositif de réglage de la hauteur (12), le guidage longitudinal (13) étant une partie intégrale de l'appuie-tête (1) et l'axe de pivotement (28) de l'élément coulissant respectif (14) étant placé de manière fixe par rapport au dossier (2), **caractérisé en ce que** le dispositif de réglage de la hauteur (12) est disposé entre l'axe de pivotement (28) pour le réglage de l'inclinaison de l'appuie-tête (1) et la face de l'appuie-tête (1) opposée à un utilisateur.

2. Appuie-tête selon la revendication 1, **caractérisé en ce que** le dispositif de réglage de la hauteur (12) présente un dispositif de positionnement à crans (15).

3. Appuie-tête selon la revendication 2, **caractérisé en ce que** le dispositif de positionnement à crans (15) présente dans le guidage longitudinal (13) une partie d'espacement (16) avec des creux (17) dans lesquels un élément d'arrêt précontraint (18) de l'élément coulissant (14) peut être mis en prise.

4. Appuie-tête selon l'une des revendications 1 à 3, **caractérisé en ce que** le dispositif de réglage de la hauteur (12) présente au moins un élément accumulateur d'énergie (19) en particulier sous la forme d'un ressort de traction qui s'étend le long du guidage longitudinal respectif (13) et qui est articulé par un point d'ancrage (20) sur l'élément coulissant (14) ainsi que par un point d'ancrage supplémentaire (21) au niveau de la face inférieure de l'appuie-tête (1).

5. Appuie-tête selon la revendication 4, **caractérisé en ce qu'**un élément de réception (23) sert pour le point d'ancrage supplémentaire (21) au niveau de la face inférieure de l'appuie-tête (1), qui est relié de manière amovible à l'appuie-tête (1).

6. Appuie-tête selon la revendication 4 ou 5, **caractérisé en ce que** l'élément coulissant (14) présente une réception pour l'élément accumulateur d'énergie (19) de telle sorte que, dans la position entièrement étirée de l'appuie-tête (1), l'élément accumulateur d'énergie (19) soit intégré dans l'élément coulissant (14).

7. Appuie-tête selon l'une des revendications 1 à 6, **caractérisé en ce que** celui-ci est pourvu de deux parties latérales (7), disposées vis-à-vis d'une partie de base (6) et sur le dessus d'un dispositif de fixation (8), en particulier un dispositif à crans, dans des positions angulaires pouvant être prédéfinies par rapport à la partie de base (6).

8. Appuie-tête selon l'une des revendications 1 à 7, **caractérisé en ce que** l'axe de pivotement (28) est formé par une articulation à friction (29) sur l'élément coulissant (14), et **en ce qu'**un point de fixation (30) pour l'appuie-tête (1) situé sur un dossier (2) est relié à l'élément coulissant (14) par l'intermédiaire de l'articulation à friction (29).

9. Appuie-tête selon la revendication 7 ou 8, **caractérisé en ce que** la partie de base (6) et les deux parties latérales (7) sont conçues comme des pièces moulées planiformes.

10. Appuie-tête selon la revendication 9, **caractérisé en ce que** la partie de base (6) présente un creux central (10), et **en ce que** les dispositifs de réglage de la hauteur et de l'inclinaison (11) s'étendent de part et d'autre à côté du creux central (10) le long de la partie de base (6), en face des parties latérales (7).

11. Appuie-tête selon l'une des revendications 7 à 10, **caractérisé en ce qu'**un dispositif d'éclairage est contenu dans le rembourrage d'au moins une des deux parties latérales (7).
